# EUROPÄISCHE PATENTANMELDUNG

(11) **EP 4 707 037 A1**
(43) Veröffentlichungstag der Anmeldung: **11.03.2026**
(21) Anmeldenummer: 25199230.1
(22) Anmeldetag: 29.08.2025
(51) Int. Cl.: B60L 15/02, B60L 58/27, H01M 10/615, H02P 29/62

(54) **VERFAHREN UND ANORDNUNG ZUM HEIZEN EINER FAHRZEUGBATTERIE EINES KRAFTFAHRZEUGS**

(30) Priorität: 02.09.2024 DE 102024208324
(71) Anmelder: VOLKSWAGEN AG, 38440 Wolfsburg (DE)
(72) Erfinder: Henkenius, Dr. Carsten, 38440 Wolfsburg (DE); Schaar, Dr. Bastian, 38440 Wolfsburg (DE)

(57) **Zusammenfassung**

Die Erfindung betrifft ein Verfahren zum Heizen einer Fahrzeugbatterie (51) eines Kraftfahrzeugs (50), wobei das Kraftfahrzeug (50) einen Pulswechselrichter (2) und eine Elektromaschine (52) aufweist, wobei die Elektromaschine (52) als fremderregte Synchronmaschine (53) ausgebildet ist, wobei einer Drehzahl (n) der Elektromaschine (52) mittels einer Zuordnungsvorschrift (4) ein magnetischer Fluss (ψ) zugeordnet wird, wobei dem magnetischen Fluss (ψ) und einem Drehmoment (T) durch Zuordnungsvorschriften (5, 6) ein Längsstrom (i_{d}) und ein Querstrom (i_{q}) zugeordnet wird, wobei ein periodischer Zusatzfluss (Δ_{z}) erzeugt wird, der nur der Zuordnungsvorschrift (6) für den Querstrom (i_{q}) zugeführt wird, wobei die Modulation des periodischen Zusatzflusses (ψ_{z}) in einem Bereich (S) eines i_{q}-i_{d}-Maschinenkennfeldes stattfindet, in dem die Linien konstanten Drehmomentes (T) nahezu vertikal verlaufen, sowie eine Anordnung (1).

## Beschreibung

Die Erfindung betrifft ein Verfahren und eine Anordnung zum Heizen einer Fahrzeugbatterie eines Kraftfahrzeugs.

Batteriezellen von Fahrzeugbatterien haben bei niedrigen Temperaturen des internen Aktivmaterials eine stark eingeschränkte Entlade- und Ladeleistung. Dementsprechend ist die Fahr- und Ladeleistung von Elektrofahrzeugen sehr niedrig, wenn die Fahrzeugbatterie, insbesondere die Hochvoltbatterie, beispielsweise nach langer Standzeit ausgekühlt ist. Außen angeordnete Heizelemente oder Heizvorrichtungen können zwar Abhilfe schaffen, erwärmen jedoch zunächst nur das Batterie- bzw. Zellgehäuse. Eine Temperatur des innenliegenden Aktivmaterials der Zellen beginnt hingegen nur zeitverzögert nach Erwärmung des Batterie- und Zellengehäuses anzusteigen. Das Heizen ist darüber hinaus aufgrund der Wärmeverluste bei der Erwärmung des Zellgehäuses nur ineffektiv, sodass sich insgesamt eine nicht ausreichende Heizwirkung ergibt.

Aus der DE 10 2019 117 944 A1 sind ein Verfahren und eine Vorrichtung zum Laden einer Fahrzeug-Batterie bekannt, wobei ein Steuergerät ausgebildet ist, einen Ladevorgang der Fahrzeug-Batterie zu beeinflussen, wobei die Vorrichtung eine Schalteinrichtung umfasst, und wobei die Schalteinrichtung ausgebildet ist, in Erwiderung auf eine Betätigung der Schalteinrichtung, insbesondere durch einen Benutzer, ein Signal an das Steuergerät zu übertragen, wobei das Steuergerät ausgebildet ist, die Fahrzeug-Batterie vor dem Ladevorgang in Erwiderung auf den Empfang des Signals abhängig von wenigstens einem Soll-Zustand für den Ladevorgang zu beeinflussen.

Aus der DE 10 2018 208 358 A1 sind ein elektrisches Bordnetz, ein Fortbewegungsmittel sowie eine elektrische Schaltung bekannt. Die elektrische Schaltung umfasst eine Eingangsklemme für eine Batterie mit einem Innenwiderstand und einer Induktivität, eine mit ihrem ersten Anschluss an die Eingangsklemme angeschlossene Kapazität, welche mit ihrem zweiten Anschluss an eine elektrische Masse angeschlossen ist, einen mit seinem ersten Anschluss an die Eingangsklemme angeschlossenen ersten Schalter, welcher mit seinem zweiten Anschluss an die elektrische Masse angeschlossen ist, und eine Auswerteeinheit, welche eingerichtet ist, im Ansprechen auf einen Bedarf zum Heizen der Batterie den ersten Schalter zu schließen, sodass ein Stromfluss durch die Induktivität Energie in der Induktivität speichert und anschließend den ersten Schalter zu öffnen, sodass die Energie einen Stromfluss in die Kapazität verursacht, und anschließend die sich über der Kapazität einstellende Spannung einen Stromfluss zurück in die Batterie verursacht. Die Batterie wird also durch thermische Verluste an einem Innenwiderstand der Batterie geheizt.

Aus der DE 10 2022 207 314 A1 ist ein weiteres Verfahren bekannt. Der Zusatzstrom soll dabei insbesondere derart ausgestaltet sein und derart aufgeprägt sein, dass ein Antrieb des Fahrzeugs hierdurch nicht beeinträchtigt wird, d.h. der Zusatzstrom führt insbesondere zu keiner Drehzahländerung einer mit dem Antriebsstrom gespeisten elektrischen Maschine und auch zu keinem zusätzlichen Drehmoment, sondern wird insbesondere in Wärme umgewandelt. Dabei ist ausgeführt, dass der Zusatzstrom durch Aufprägen mindestens einer Oberwelle erzeugt wird.

Der Erfindung liegt das technische Problem zugrunde, ein Verfahren derart zu verbessern, dass es für eine fremderregte Synchronmaschine besser geeignet ist. Ein weiteres technisches Problem ist die Schaffung einer entsprechenden Anordnung.

Die Lösung des technischen Problems ergibt sich durch ein Verfahren mit den Merkmalen des Anspruchs 1 sowie eine Anordnung mit den Merkmalen des Anspruchs 8. Weitere vorteilhafte Ausgestaltungen der Erfindung ergeben sich aus den Unteransprüchen.

Vorgeschlagen wird ein Verfahren zum Heizen einer Fahrzeugbatterie eines Kraftfahrzeugs, wobei das Kraftfahrzeug einen Pulswechselrichter und eine Elektromaschine aufweist, wobei die Elektromaschine als fremderregte Synchronmaschine ausgebildet ist. Dabei wird einer Drehzahl der Elektromaschine mittels einer Zuordnungsvorschrift ein magnetischer Fluss zugeordnet, wobei dem magnetischen Fluss und einem Drehmoment durch Zuordnungsvorschriften ein Längsstrom und ein Querstrom zugeordnet wird. Weiter wird ein periodischer Zusatzfluss erzeugt, der nur der Zuordnungsvorschrift für den Querstrom zugeführt wird, wobei die Modulation des periodischen Zusatzflusses in einem Bereich eines i_{q}-i_{d}-Maschinenfeldes stattfindet, in dem die Linien konstanten Drehmomentes nahezu vertikal verlaufen. Hierdurch wird nur der Querstrom moduliert, wobei das Drehmoment konstant bleibt. Hierdurch werden Rückwirkungen auf den Rotor vermieden, die ansonsten zu einer Bauteile-Belastung auf der Rotorseite führen könnten, was bei den bekannten Verfahren passiert, wo sich auch der Längsstrom verändert. Das Pulsieren des Querstromes ist dabei erheblich effektiver als eine konstante Stromerhöhung, da dort die Verlustwärme primär in der Elektromaschine entsteht.

Vorzugsweise ist dabei der periodische Zusatzfluss mittelwertfrei, sodass der Zusatzfluss im Mittel keine Auswirkungen auf die Drehzahl hat.

In einer weiteren Ausführungsform weist der Zusatzfluss eine Dreieckfunktion auf.

In einer alternativen Ausführungsform weist der Zusatzfluss mindestens eine Sinusfunktion auf. Dabei können auch verschiedene Sinusfunktionen überlagert werden. Der Vorteil der Sinusfunktion ist, dass diese keine Sprünge im Gradienten aufweisen. Allerdings lasst sich eine Dreiecksfunktion softwaretechnisch sehr einfach implementieren.

In einer weiteren Ausführungsform ist ein maximaler Strom für die Elektromaschine vorgegeben, wobei der periodische Querstrom auf den maximalen Strom begrenzt ist. Hierdurch wird verhindert, dass durch den Heizbetrieb die Elektromaschine zu stark thermisch belastet wird. Der maximale Strom kann dabei z.B. empirisch vorab bestimmt werden.

In einer weiteren Ausführungsform ist die Frequenz des periodischen Zusatzflusses größer 500 Hz. Aufgrund dieser hohen Frequenz in Verbindung mit der Mittelwertfreiheit des Zusatzflusses hat der Zusatzfluss keinen Einfluss auf die Drehzahl, da diese aufgrund der Trägheit der Elektromaschine nicht so schnell auf den magnetischen Fluss reagieren kann. Weiter vorzugsweise ist die Frequenz des Zusatzflusses größer/gleich 1 kHz.

Vorzugsweise ist während des Heizens der Erregerstrom null oder unterhalb eines Schwellwertes.

Hinsichtlich der Ausgestaltung der Anordnung wird vollinhaltlich auf die vorangegangenen Ausführungen des Verfahrens Bezug genommen.

Die Erfindung wird nachfolgend anhand eines bevorzugten Ausführungsbeispiels näher erläutert. Die Figuren zeigen:
- Fig. 1: eine schematische Darstellung einer Anordnung zum Heizen einer Fahrzeugbatterie eines Kraftfahrzeugs,
- Fig. 2: eine kombinierte Darstellung normierter Iso-Drehmoment- und Flusskennlinien einer fremderregten Synchronmaschine bei Erregerstrom null mit einer Steuerung zur Ermittlung des Längs- und Querstromes und
- Fig. 3: eine kombinierte Darstellung normierter Iso-Drehmoment- und Flusskennlinien einer fremderregten Synchronmaschine bei einem geringen Erregerstrom und einer Steuerung zur Ermittlung des Längs- und Querstroms.

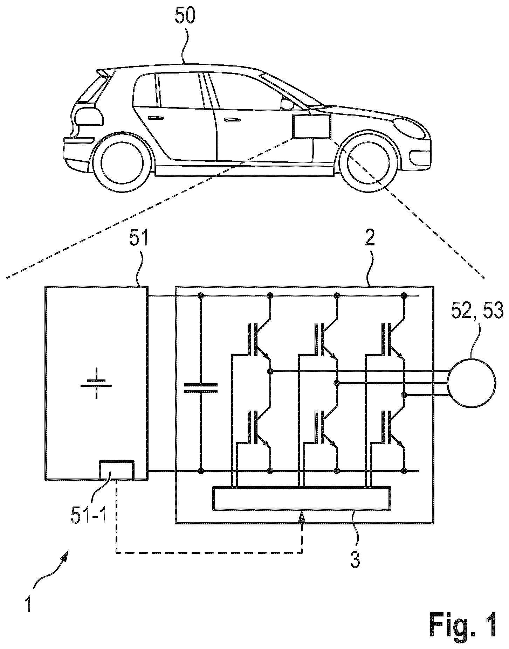

In der Fig. 1 ist schematisch eine Anordnung 1 zum Heizen einer Fahrzeugbatterie 51 eines Kraftfahrzeugs 50 dargestellt, um die Fahrzeugbatterie 51 im Fahrzeugstillstand als auch im Fahrbetrieb heizen zu können. Die Anordnung 1 weist hierzu einen Pulswechselrichter 2 und eine Steuereinrichtung 3 zum Ansteuern des Pulswechselrichters 2 auf. Weiter ist eine Elektromaschine 52 dargestellt, die mit dem Pulswechselrichter 2 verbunden ist. Der Fahrzeugbatterie 51 ist mindestens ein Temperatursensor 51-1 zugeordnet, wobei der Steuereinrichtung 3 entweder die Temperatur der Fahrzeugbatterie 51 übermittelt wird ober aber ein Signal, dass die Temperatur der Fahrzeugbatterie 51 unter einem Schwellwert ist. Die Elektromaschine 52 ist als fremderregte Synchronmaschine 53 ausgebildet.

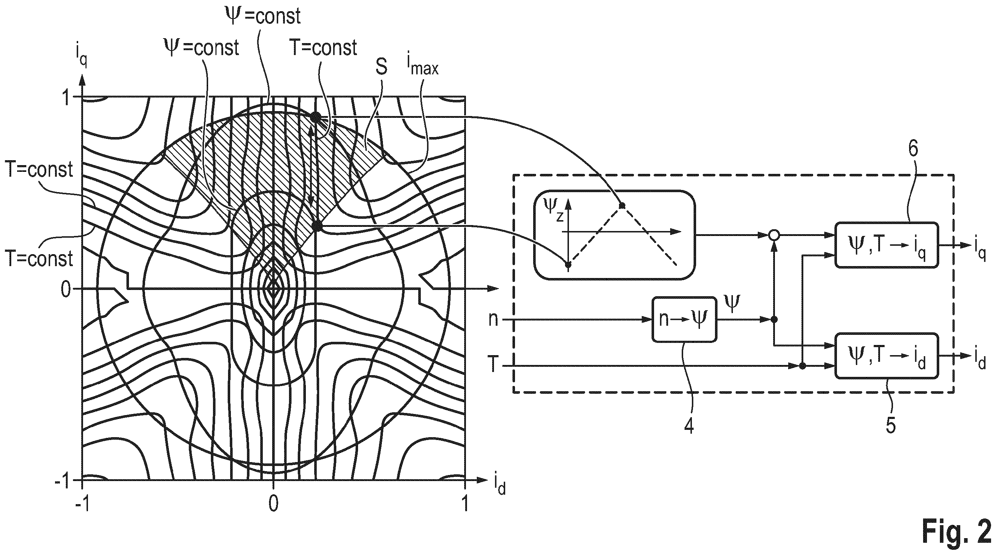

In der Fig. 2 sind links normierte Iso-Drehmoment- und Flusskennlinien dargestellt, wobei der eingezeichnete Kreis den maximalen Strom iₘₐₓ der Elektromaschine 52 darstellt. Dabei ist der Querstrom i_{q} über dem Längsstrom i_{d} dargestellt. Dabei ist weiter ein Kreissegment S eingezeichnet, in dem den Linien konstanten Drehmomentes T nahezu vertikal verlaufen. Von einem nicht dargestellten Motorsteuergerät erhält die Steuereinrichtung 3 als Vorgabe eine Drehzahl n und ein Drehmoment T. Der Erregerstrom der fremderregten Synchronmaschine 53 ist null. Das Kraftfahrzeug 50 ist im Stillstand oder im Reluktanz-Betrieb. Das vorgegebene Drehmoment T liegt dabei im Kreissegment S.

Mittels einer Zuordnungsvorschrift 4 wird dabei die Drehzahl n in einen magnetischen Fluss ψ transformiert. Die Zuordnungsvorschrift kann dabei eine Look-up-Tabelle sein oder aber eine analytische Zuordnung (Formel) sein. Mittels weiterer Zuordnungsvorschriften 5, 6 wird dann aus dem magnetischen Fluss ψ und dem Drehmoment T ein Längsstrom i_{d} und ein Querstrom i_{q} bestimmt. Dabei wird der Zuordnungsvorschrift 6 für den Querstrom i_{q} ein periodischer, mittelwertfreier magnetischer Zusatzfluss ψ_{z} zugeführt, sodass der Querstrom i_{q} zwischen zwei Punkten pulsiert, die in dem Iso-Diagramm eingezeichnet sind, wobei der Pulsiervorgang durch einen Doppelpfeil dargestellt ist. Das Drehmoment T ändert sich dabei nicht (bzw. kaum). Ist die Frequenz des Zusatzflusses ψ_{z} ausreichend groß (z.B. > 500 Hz), bleibt aufgrund der Trägheit der Elektromaschine 52 die Drehzahl konstant. Dadurch, dass der Längsstrom i_{d} konstant bleibt, werden Rückkopplungen auf den Rotor minimiert bzw. verhindert.

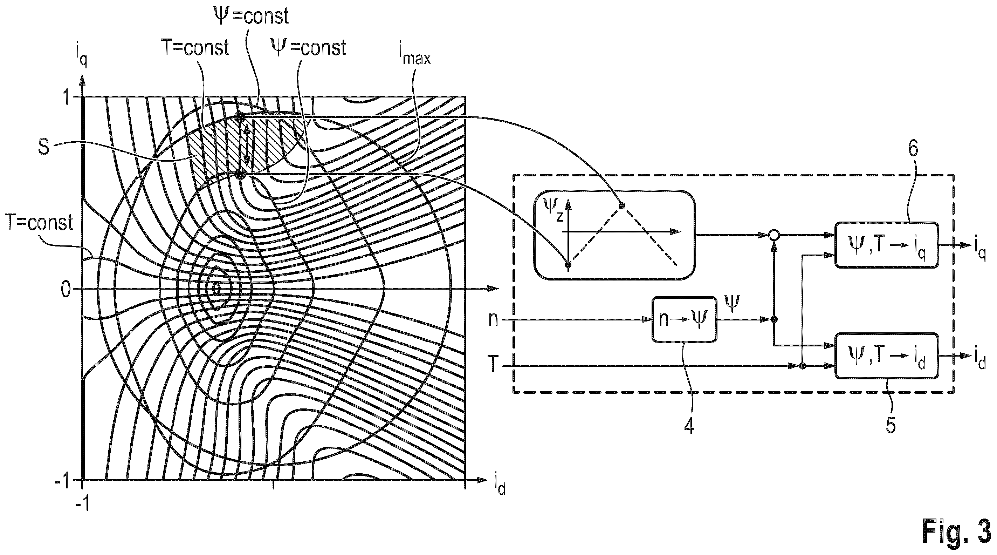

In der Fig. 3 ist ein i_{q}-i_{d}-Maschinenkennfeld dargestellt mit einem Erregerstrom ungleich null, wobei jedoch der Erregerstrom gering ist und unter einem Schwellwert liegt. Ein solcher geringer Erregerstrom fließt in den Rotorwicklungen der fremderregten Synchronmaschine 53 (siehe Fig. 1), wenn nur geringe Antriebsmomente benötigt werden. Aufgrund des Erregerstroms hat sich das symmetrische Kreissegment 5 aus Fig. 2 zusammengestaucht, sodass sich der Bereich, wo die Iso-Linien für das Drehmoment T vertikal verlaufen, reduziert hat. Auch hier kann dann aber ein Heizbetrieb durchgeführt werden, indem durch den periodischen Zusatzfluss ψ_{z} ausschließlich der Querstrom i_{q} pulsiert wird, ohne dass das Drehmoment T und der Längsstrom i_{d} sich ändern und so die Rückwirkungen auf den Rotor verhindert werden.

### Bezugszeichenliste

- 1: Anordnung
- 2: Pulswechselrichter
- 3: Steuereinrichtung
- 4: Zuordnungsvorschrift
- 5: Zuordnungsvorschrift
- 6: Zuordnungsvorschrift
- 50: Kraftfahrzeug
- 51: Fahrzeugbatterie
- 51-1: Temperatursensor#
- 52: Elektromaschine
- 53: Synchronmaschine
- i: Strom
- iₘₐₓ: Maximalstrom
- i_{d}: Längsstrom
- i_{q}: Querstrom
- n: Drehzahl
- S: Kreissegment
- T: Drehmoment
- ψ: magnetischer Fluss
- ψ_{z}: Zusatzfluss

## Patentansprüche

1. Verfahren zum Heizen einer Fahrzeugbatterie (51) eines Kraftfahrzeugs (50), wobei das Kraftfahrzeug (50) einen Pulswechselrichter (2) und eine Elektromaschine (52) aufweist, wobei die Elektromaschine (52) als fremderregte Synchronmaschine (53) ausgebildet ist, wobei einer Drehzahl (n) der Elektromaschine (52) mittels einer Zuordnungsvorschrift (4) ein magnetischer Fluss (ψ) zugeordnet wird, wobei dem magnetischen Fluss (ψ) und einem Drehmoment (T) durch Zuordnungsvorschriften (5, 6) ein Längsstrom (i_{d}) und ein Querstrom (i_{q}) zugeordnet wird, wobei ein periodischer Zusatzfluss (Δ_{z}) erzeugt wird, der nur der Zuordnungsvorschrift (6) für den Querstrom (i_{q}) zugeführt wird, wobei die Modulation des periodischen Zusatzflusses (ψ_{z}) in einem Bereich (S) eines i_{q}-i_{d}-Maschinenkennfeldes stattfindet, in dem die Linien konstanten Drehmomentes (T) nahezu vertikal verlaufen.

2. Verfahren nach Anspruch 1, **dadurch gekennzeichnet, dass** der periodische Zusatzfluss (ψ_{z}) mittelwertfrei ist.

3. Verfahren nach Anspruch 1 oder 2, **dadurch gekennzeichnet, dass** der periodische Zusatzfluss (ψ_{z}) eine Dreiecksfunktion aufweist.

4. Verfahren nach Anspruch 1 oder 2, **dadurch gekennzeichnet, dass** der periodische Zusatzfluss (ψ_{z}) mindestens eine Sinusfunktion aufweist.

5. Verfahren nach einem der vorangegangenen Ansprüche, **dadurch gekennzeichnet, dass** ein maximaler Strom (iₘₐₓ) für die Elektromaschine 52) vorgegeben ist, wobei der periodische Querstrom (_{q}) auf den maximalen Strom (iₘₐₓ) begrenzt ist.

6. Verfahren nach einem der vorangegangenen Ansprüche, **dadurch gekennzeichnet, dass** die Frequenz des periodischen Zusatzflusses größer 500 Hz ist.

7. Verfahren nach einem der vorangegangenen Ansprüche, **dadurch gekennzeichnet, dass** während des Heizens der Erregerstrom null oder unterhalb eines Schwellwertes ist.

8. Anordnung (1) zum Heizen einer Fahrzeugbatterie (51) eines Kraftfahrzeugs, umfassend einen Pulswechselrichters (2), eine Steuereinrichtung (3) zum Ansteuern des Pulswechselrichters (2) und eine als fremderregte Synchronmaschine (53) ausgebildete Elektromaschine (52), wobei die Anordnung (1) derart ausgebildet ist, dass der Steuereinrichtung (3) ein Drehmoment (T) und eine Drehzahl (n) der Elektromaschine (52) vorgegeben werden, wobei die Steuereinrichtung (3) derart ausgebildet ist, die Fahrzeugbatterie (51) mittels eines Zusatzstromes zu heizen, ohne dass sich das Drehmoment (T) verändert, wobei die Steuereinrichtung (3) derart ausgebildet ist, dass der Drehzahl (n) der Elektromaschine (52) mittels einer Zuordnungsvorschrift (4) ein magnetischer Fluss (ψ) zugeordnet wird, wobei dem magnetischen Fluss (ψ) und dem Drehmoment (T) durch Zuordnungsvorschriften (5, 6) ein Längsstrom (i_{d}) und ein Querstrom (i_{q}) zugeordnet werden, wobei ein periodischer Zusatzfluss (ψ_{z}) erzeugt wird, der nur der Zuordnungsvorschrift (6) für den Querstrom (i_{q}) zugeführt wird, wobei die Modulation des periodischen Zusatzflusses (ψ_{z}) in einem Bereich (S) eines i_{q}-i_{d}-Maschinenkennfeldes stattfindet, in dem die Linien konstanten Drehmomentes (T) nahezu vertikal verlaufen.

9. Anordnung nach Anspruch 8, **dadurch gekennzeichnet, dass** der periodische Zusatzfluss (ψ_{z}) mittelwertfrei ist.

10. Anordnung nach Anspruch 8 oder 9, **dadurch gekennzeichnet, dass** der periodische Zusatzfluss (ψ_{z}) eine Frequenz größer 500 Hz aufweist.
